# EUROPEAN PATENT APPLICATION

(11) **EP 2 157 831 A2**
(43) Date of publication of application: **24.02.2010**
(21) Application number: 09164766.9
(22) Date of filing: 07.07.2009
(51) Int. Cl.: H05B 3/14, H05B 3/40

(54) **Hollow heater**

(30) Priority: 25.07.2008 CN 200810142616; 11.07.2008 CN 200810068462; 25.07.2008 CN 200810142610; 11.07.2008 CN 200810068461; 25.07.2008 CN 200810142617; 25.07.2008 CN 200810142528; 25.07.2008 CN 200810142522
(71) Applicant: Tsing Hua University, Haidian District Beijing City (CN); Hon Hai Precision Industry Co., Ltd., Tu-cheng City, Taipei Hsien (TW)
(72) Inventor: Wang, Ding, Beijing (CN); Fan, Shou-Shan, Beijing (CN); Liu, Chang-Hong, Beijing (CN); Feng, Chen, Beijing (CN); Jiang, Kai-Li, Beijing (CN); Liu, Kai, Beijing (CN)
(74) Representative: Stuttard, Garry Philip

(57) **Abstract**

An apparatus includes a hollow heater. The hollow heater includes a heating element and at least two electrodes. The at least two electrodes are electrically connected to the heating element. The heating element includes a carbon nanotube structure comprising of a plurality of carbon nanotubes. The carbon nanotube structure defines a hollow space.

## Description

The present disclosure generally relates to hollow heaters and, particularly, to a hollow heater based on carbon nanotubes.

An object to be heated can be placed in a hollow heater. As the hollow heater can heat the object all around and the heating efficiency is high. Hollow heaters have been widely used in various applications.

A typical hollow heater generally includes a hollow supporter, a heating element and two electrodes electrically connected to the heating element. The heating element is disposed on a surface of the hollow supporter. The hollow heater can generate heat when a voltage is applied to it via the two electrodes. The heating element is often made of metal, such as, tungsten. Metals, which have good conductivity, can generate a lot of heat even when a low voltage is applied. However, metals may be easily oxidized, thus the heating element has a relatively short life. Furthermore, since metals have a relatively high density, metal heating elements are heavy, which limits the use of hollow heaters. Additionally, metal heating elements are difficult to bend to a desired shape without breaking.

What is needed, therefore, is a hollow heater based on carbon nanotubes that can overcome the above-described shortcomings.

Many aspects of the present hollow heater can better be understood with reference to the following drawings. The components in the drawings are not necessarily to scale, the emphasis instead being placed upon clearly illustrating the principles of the present hollow heater.

FIG. 1 is a schematic view of a hollow heater having a carbon nanotube structure.

FIG. 2 is a schematic, cross-sectional view, taken along a line II-II of FIG. 1.

FIG. 3 is a Scanning Electron Microscope (SEM) image of a drawn carbon nanotube film used in the hollow heater of FIG. 1.

FIG. 4 is a schematic view of a carbon nanotube segment in the drawn carbon nanotube film of FIG. 3.

FIG. 5 is a SEM image of a flocculated carbon nanotube film used in the hollow heater of FIG. 1.

FIG. 6 is a SEM image of a pressed carbon nanotube film used in the hollow heater of FIG. 1.

FIG. 7 is a schematic view of a hollow heater of FIG. 1 having a heating element including one linear carbon nanotube structure.

FIG. 8 is a schematic view of a hollow heater of FIG. 1 having a heating element including a plurality of parallel linear carbon nanotube structures.

FIG. 9 is a schematic view of a hollow heater of FIG. 1 having a heating element including a plurality of woven linear carbon nanotube structures.

FIG. 10 is a SEM image of an untwisted carbon nanotube wire used in the hollow heater of FIG. 1.

FIG. 11 is a SEM image of a twisted carbon nanotube wire used in the hollow heater of FIG. 1.

FIG. 12 is a flow chart of a method for fabricating the hollow heater of FIG. 1.

Corresponding reference characters indicate corresponding parts throughout the several views. The exemplifications set out herein illustrate at least one exemplary embodiment of the present hollow heater, in at least one form, and such exemplifications are not to be construed as limiting the scope of the invention in any manner.

Reference will now be made to the drawings, in detail, to describe embodiments of the hollow heater.

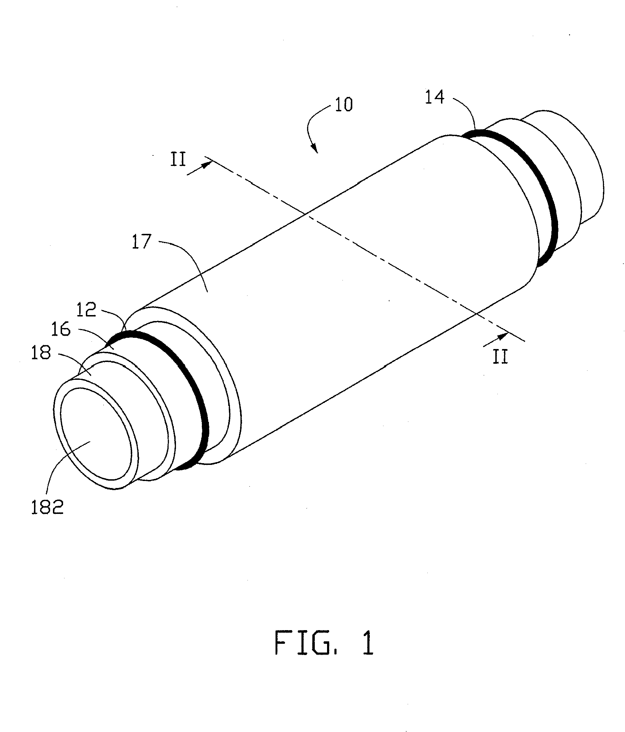

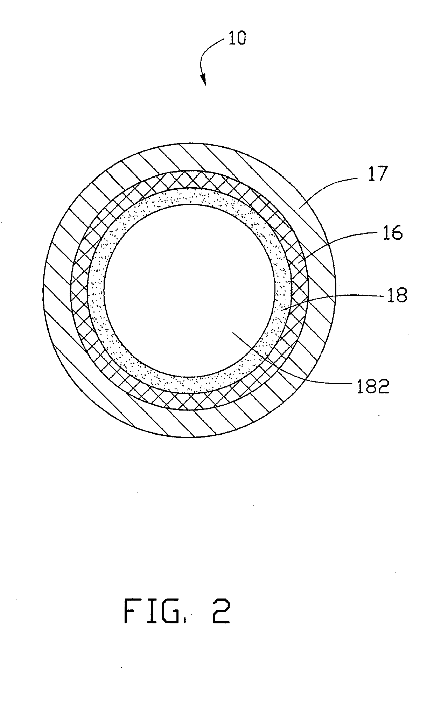

Referring to FIGS. 1 and 2, a hollow heater 10 is shown. The hollow heater 10 includes a hollow supporter 18, a heating element 16, a first electrode 12, a second electrode 14, and a heat-reflecting layer 17. The heating element 16 is disposed on an outer circumferential surface of the hollow supporter 18. The heat-reflecting layer 17 is disposed on an outer circumferential surface of the heating element 16. The hollow supporter 18 and the heat-reflecting layer 17 are located at opposite circumferential surfaces of the heating element 16. The first electrode 12 and the second electrode 14 are electrically connected to the heating element 16 and spaced from each other. In one embodiment, the first electrode 12 and the second electrode 14 are located on opposite ends of the heat element 16.

The hollow supporter 18 is configured for supporting the heating element 16 and the heat-reflecting layer 17. The hollow supporter 18 defines a hollow space 182. The shape and size of the hollow supporter 18 can be determined according to practical demands. For example, the hollow supporter 18 can be shaped as a hollow cylinder, a hollow ball, or a hollow cube, for example. The material of the hollow supporter 18 is selected from soft materials or rigid material. The soft material can be plastics, resins or fibers. The rigid material can be ceramic, glass, and quartz. When soft material is used, the hollow heater 10 can be shaped into any form according to need. The shape and size of the hollow supporter 18 can be determined according to practical demands. For example, the hollow supporter 18 can be shaped as a hollow cylinder, a hollow ball, or a hollow cube, for example. A hollow supporter 18 is only used when desired. The heating element 16 can be free standing structure. When the heating element 16 is free standing structure, and defines a hollow space itself, the hollow supporter 18 can be omitted. In the present embodiment, the hollow supporter 18 is a hollow cylinder.

The heating element 16 can be attached on the inner surface or wrapped on the outer surface of the hollow supporter 18. In the present embodiment, the heating element 16 is disposed on the outer circumferential surface of the hollow supporter 18. Understandably, the heating element 16 can be fixed on the hollow supporter 18 with an adhesive (not shown) or by a mechanical method, such as with bolts. The heating element 16 includes a carbon nanotube structure. The carbon nanotube structure can have many different structures and a large specific surface area. The carbon nanotube structure can be a substantially pure structure of carbon nanotubes with few impurities. The heat capacity per unit area of the carbon nanotube structure can be less than 2×10⁻⁴ J/m²·K. Typically, the heat capacity per unit area of the carbon nanotube structure is less than or equal to 1.7×10⁻⁶ J/m²·K. As the carbon nanotube structure can be substantially pure, the carbon nanotube cannot be easily oxidized and the life of the heating element 16 will be relatively long. Further, as the carbon nanotube tubes have a low density, about 1.35g/cm³, the heating element 16 is light. As the heat capacity of the carbon nanotube structure is very low, the heating element 16 has a high response speed to heat. Therefore, the temperature of the heating element 16 can rise and fall quickly, whereby the heating element 16 has a high heating efficiency.

The carbon nanotube structure includes a plurality of carbon nanotubes uniformly distributed therein, and the carbon nanotubes can be combined by van der Waals attractive force therebetween. The carbon nanotubes in the carbon nanotube structure can be arranged orderly or disorderly. The term 'disordered carbon nanotube structure' refers to a structure where the carbon nanotubes are arranged along many different directions, and the aligning directions of the carbon nanotubes are random; however, the number of the carbon nanotubes arranged along each different direction can be almost the same (e.g. uniformly disordered); and/or entangled with each other. The disordered carbon nanotube structure is isotropic. The carbon nanotubes in the disordered carbon nanotube structure can be entangled with each other.

The carbon nanotube structure including ordered carbon nanotubes is an ordered carbon nanotube structure. The term 'ordered carbon nanotube structure' refers to a structure in which the carbon nanotubes are arranged in a consistently systematic manner, e.g., the carbon nanotubes are arranged approximately along a same direction and/or have two or more sections within each of which the carbon nanotubes are arranged approximately along a same direction (different sections can have different directions). The carbon nanotubes in the carbon nanotube structure can be selected from a group consisting of single-walled, double-walled, and/or multi-walled carbon nanotubes.

The carbon nanotube structure can be a carbon nanotube film structure with a thickness ranging from about 0.5 nanometers to about 1 millimeter. The carbon nanotube film structure includes at least a carbon nanotube film. The carbon nanotube structure can include at least a linear carbon nanotube structure with a diameter ranging from about 0.5 nanometers to about 1 millimeter. The carbon nanotube structure can also be a combination of the carbon nanotube film structure and the linear carbon nanotube structure.

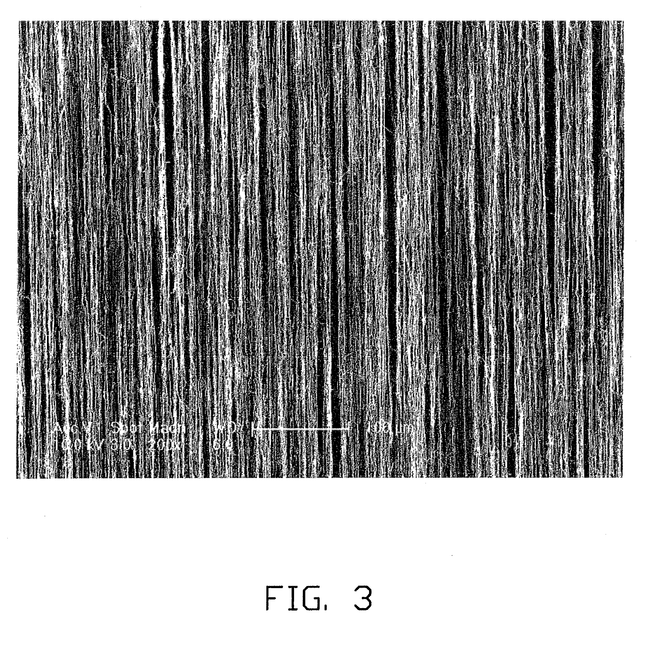

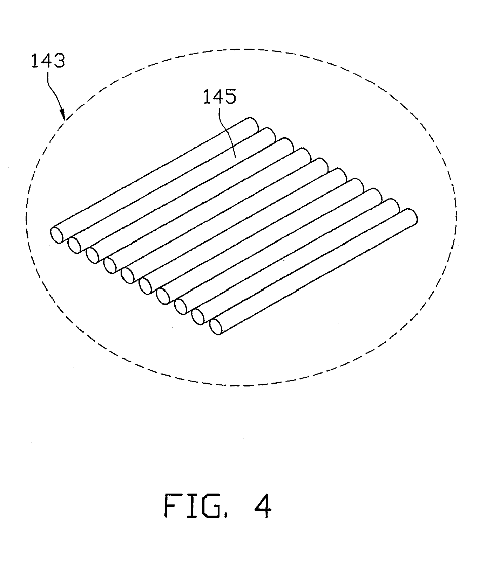

In one embodiment, the carbon nanotube film structure includes at least one drawn carbon nanotube film. The film can be drawn from a carbon nanotube array, to form a drawn carbon nanotube film. Examples of drawn carbon nanotube film are taught by US patent 7,045,108 to Jiang et al., and WO 2007015710 to Zhang et al. The drawn carbon nanotube film includes a plurality of successive and oriented carbon nanotubes joined end-to-end by van der Waals attractive force therebetween. The drawn carbon nanotube film is a free-standing film. Referring to FIGS. 3 to 4, each drawn carbon nanotube film includes a plurality of successively oriented carbon nanotube segments 143 joined end-to-end by van der Waals attractive force therebetween. Each carbon nanotube segment 143 includes a plurality of carbon nanotubes 145 parallel to each other, and combined by van der Waals attractive force therebetween. As can be seen in FIG. 3, some variations can occur in the drawn carbon nanotube film. The carbon nanotubes 145 in the drawn carbon nanotube film are also oriented along a preferred orientation. The carbon nanotube film also can be treated with an organic solvent. After that, the mechanical strength and toughness of the treated carbon nanotube film are increased and the coefficient of friction of the treated carbon nanotube films is reduced. A thickness of the carbon nanotube film can range from about 0.5 nanometers to about 100 micrometers.

The carbon nanotube film structure of the heating element 16 also can include at least two layers of carbon nanotube films stacked or overlapped with each other. The number of the layers of the carbon nanotube films is not limited. Additionally, when the carbon nanotubes in the carbon nanotube film are aligned along one preferred orientation, an angle can exist between the orientations of carbon nanotubes in adjacent films. The adjacent carbon nanotube films can be combined only by the van der Waals attractive force therebetween. An angle between the aligned directions of the carbon nanotubes in the two adjacent carbon nanotube films can range from above 0 ° to about 90 °. When the angle between the aligned directions of the carbon nanotubes in adjacent carbon nanotube films is larger than 0 degrees, a microporous structure is defined by the carbon nanotubes in the heating element 16. The carbon nanotube structure in an embodiment has a plurality of micropores. The stacked carbon nanotube films can enhance the structural integrity of the carbon nanotube structure. In some embodiments, the carbon nanotube structure may have a free standing structure and does not require the usage of any supporter.

In another embodiment, the carbon nanotube film structure includes a carbon nanotube film with ultra-long oriented carbon nanotubes. The carbon nanotubes are parallel with each other, have almost equal length and are combined side by side by van der Waals attractive force therebetween. A length of the carbon nanotubes can reach up to several millimeters. The length of the carbon nanotube film can be equal to the length of the carbon nanotubes, such that at least one carbon nanotube will span the entire length of the carbon nanotube film. The length of the carbon nanotube film is only limited by the length of the carbon nanotube.

In some embodiments, the carbon nanotube film can be produced by growing a strip-shaped carbon nanotube array, and pushing the strip-shaped carbon nanotube array down along a direction perpendicular to length of the strip, and has a length ranged from about 1 millimeter to about 10 millimeters.

In some embodiments, the carbon nanotube film can be produced by a method adopting a "kite-mechanism" and can have carbon nanotube with a length of even above 10 centimeters. This is considered by some to be ultra-long carbon nanotubes. However, this method can be used to grow carbon nanotubes of many sizes. Typically, the carbon nanotube film can be produced by providing a growing substrate with a catalyst layer located thereon; placing the growing substrate adjacent to the insulating substrate in a chamber; and heating the chamber to a growth temperature for carbon nanotubes under a protective gas, and introducing a carbon source gas along a gas flow direction, growing a plurality of carbon nanotubes on the insulating substrate. After introducing the carbon source gas into the chamber, the carbon nanotubes starts to grow under the effect of the catalyst. One end (e.g., the root) of the carbon nanotubes is fixed on the growing substrate, and the other end (e.g., the top/free end) of the carbon nanotubes grow continuously. The growing substrate is near an inlet of the introduced carbon source gas, the ultralong carbon nanotubes float above the insulating substrate with the roots of the ultralong carbon nanotubes still sticking on the growing substrate, as the carbon source gas is continuously introduced into the chamber. The length of the ultralong carbon nanotubes depends on the growth conditions. After growth has been stopped, the ultralong carbon nanotubes land on the insulating substrate. The carbon nanotubes are then separated from the growing substrate. This can be repeated many times so as to obtain many layers of carbon nanotubes on a single insulating substrate. The layers may have an angle from 0 to less than or equal to 90 degrees.

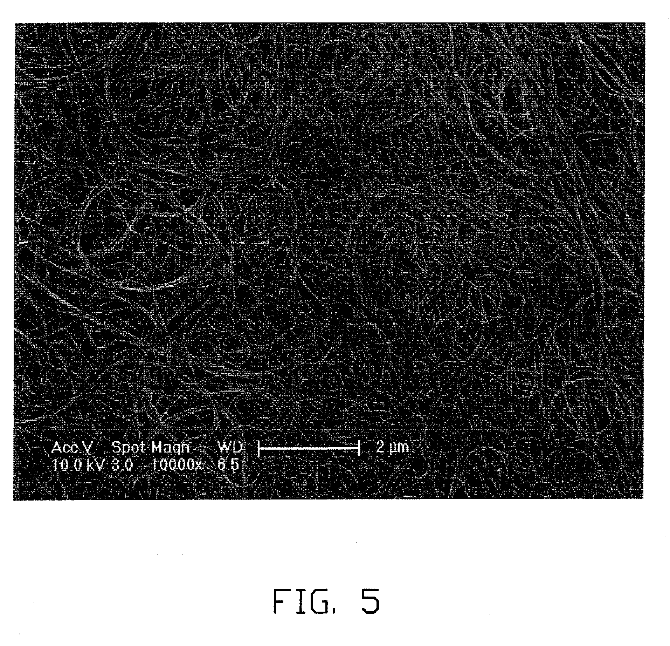

In another embodiment, the carbon nanotube film structure includes a flocculated carbon nanotube film. Referring to FIG 5, the flocculated carbon nanotube film can include a plurality of long, curved, disordered carbon nanotubes entangled with each other. Further, the flocculated carbon nanotube film can be isotropic. The carbon nanotubes can be substantially uniformly dispersed in the carbon nanotube film. The adjacent carbon nanotubes are acted upon by the van der Waals attractive force therebetween, thereby forming an entangled structure with micropores defined therein. It is understood that the flocculated carbon nanotube film is very porous. Sizes of the micropores can be less than 10 micrometers. The porous nature of the flocculated carbon nanotube film will increase specific surface area of the carbon nanotube structure. Further, due to the carbon nanotubes in the carbon nanotube structure being entangled with each other, the carbon nanotube structure employing the flocculated carbon nanotube film has excellent durability, and can be fashioned into desired shapes with a low risk to the integrity of carbon nanotube structure. The flocculated carbon nanotube film, in some embodiments, will not require the use of supporter due to the carbon nanotubes being entangled and adhered together by van der Waals attractive force therebetween. The thickness of the flocculated carbon nanotube film can range from about 0.5 nanometers to about 1 millimeter.

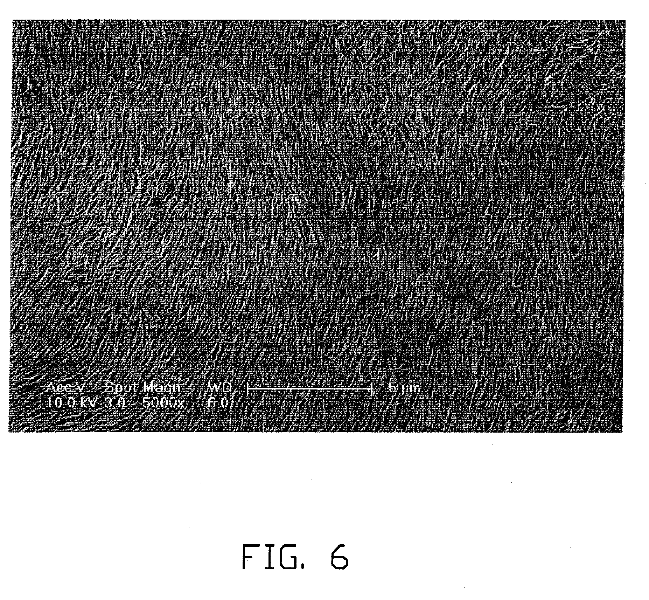

In another embodiment, the carbon nanotube film structure can include at least a pressed carbon nanotube film. Referring to FIG. 6, the pressed carbon nanotube film can be a free-standing carbon nanotube film. The carbon nanotubes in the pressed carbon nanotube film are arranged along a same direction or arranged along different directions. The carbon nanotubes in the pressed carbon nanotube film can rest upon each other. Adjacent carbon nanotubes are attracted to each other and combined by van der Waals attractive force. An angle between a primary alignment direction of the carbon nanotubes and a surface of the pressed carbon nanotube film is from 0 degrees to approximately 15 degrees. The greater the pressure is, the smaller the angle is. When the carbon nanotubes in the pressed carbon nanotube film are arranged along different directions, the carbon nanotube structure can be isotropic. The thickness of the pressed carbon nanotube film ranges from about 0.5 nm to about 1 mm.

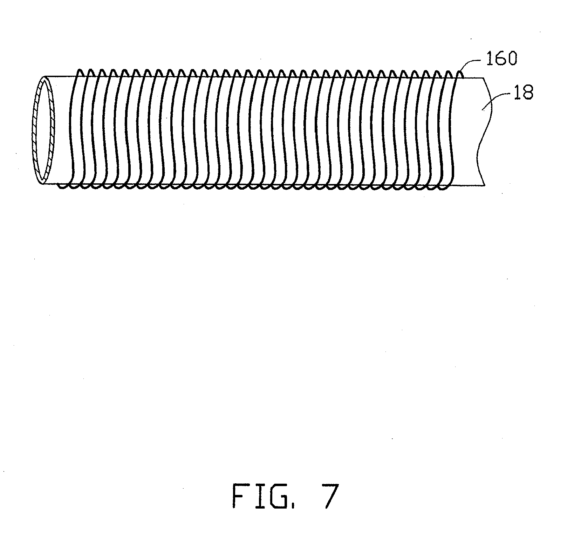

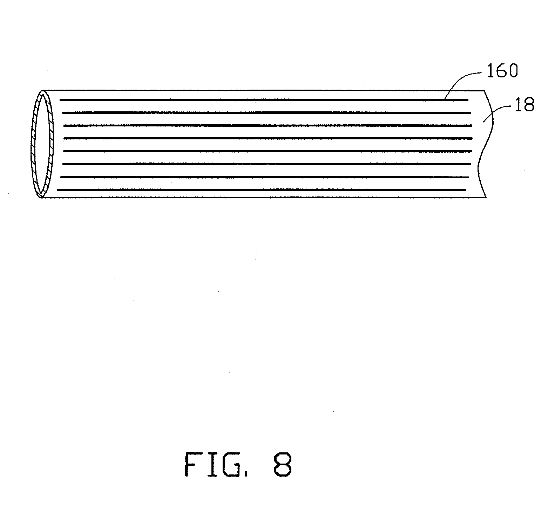

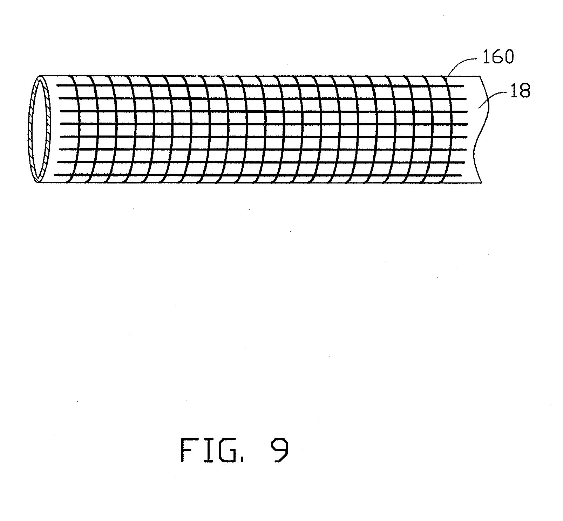

The carbon nanotube structure can include one or more linear carbon nanotube structures. In one example, referring to FIG. 7, the linear carbon nanotube structure 160 can twist about the hollow supporter 18 like a helix. In another example, referring to FIG. 8, when the heating element 16 includes two or more linear carbon nanotube structures 160, the linear carbon nanotube structures 160 can be disposed on the surface of the hollow supporter 18 and parallel with each other. The linear carbon nanotube structure can be disposed side by side or separately. In other example, referring to FIG. 9, when the heating element 16 includes a plurality of linear carbon nanotube structures 160, the linear carbon nanotube structures 160 can be knitted to form a net disposed on the surface of the hollow supporter 18. It is understood that these linear carbon nanotube structures 160 can be applied to the inside of the supporter 18. It is understood that in some embodiments, some of the carbon nanotube structures have large specific surface area and adhesive nature, such that the heating element 16 can be adhered directly to the surface of the hollow supporter 18. The linear carbon nanotube structure 160 can be a carbon nanotube wire or a carbon nanotube cable.

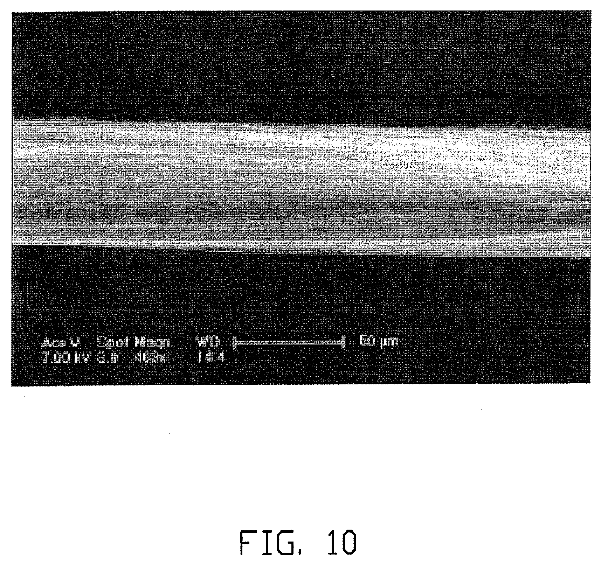

The carbon nanotube wire can be untwisted or twisted. Treating the drawn carbon nanotube film with a volatile organic solvent can form the untwisted carbon nanotube wire. Specifically, the organic solvent is applied to soak the entire surface of the drawn carbon nanotube film. During the soaking, adjacent parallel carbon nanotubes in the drawn carbon nanotube film will bundle together, due to the surface tension of the organic solvent as it volatilizes, and thus, the drawn carbon nanotube film will be shrunk into the untwisted carbon nanotube wire. Referring to FIG 10, the untwisted carbon nanotube wire includes a plurality of carbon nanotubes substantially oriented along a same direction (i.e., a direction along the length of the untwisted carbon nanotube wire). The carbon nanotubes are parallel to an axis of the untwisted carbon nanotube wire. More specifically, the untwisted carbon nanotube wire includes a plurality of successive carbon nanotube segments joined end to end by van der Waals attractive force therebetween. Each carbon nanotube segment includes a plurality of carbon nanotubes substantially parallel to each other, and combined by van der Waals attractive force therebetween. The carbon nanotube segments can vary in width, thickness, uniformity and shape. A length of the untwisted carbon nanotube wire can be arbitrarily set as desired. A diameter of the untwisted carbon nanotube wire ranges from 0.5 nanometers to 100 micrometers.

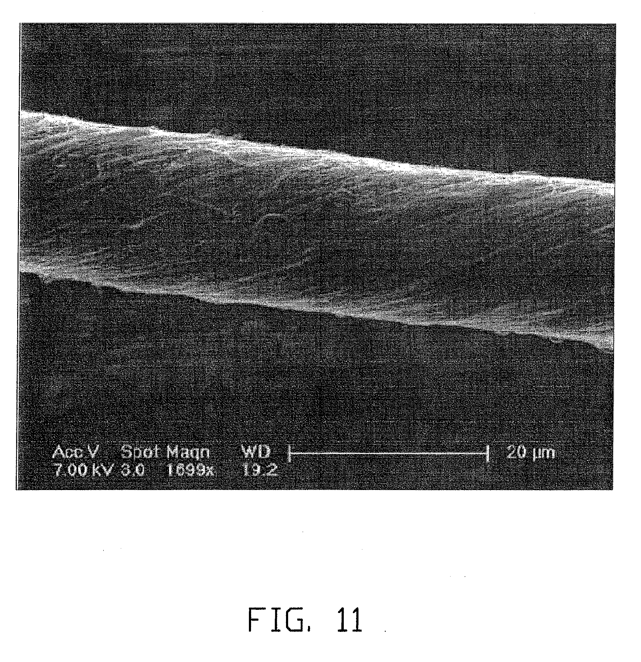

The twisted carbon nanotube wire can be formed by twisting a drawn carbon nanotube film using a mechanical force to turn the two ends of the drawn carbon nanotube film in opposite directions. Referring to FIG. 11, the twisted carbon nanotube wire includes a plurality of carbon nanotubes helically oriented around an axial direction of the twisted carbon nanotube wire. More specifically, the twisted carbon nanotube wire includes a plurality of successive carbon nanotube segments joined end to end by van der Waals attractive force therebetween. Each carbon nanotube segment includes a plurality of carbon nanotubes parallel to each other, and combined by van der Waals attractive force therebetween. The carbon nanotube segments can vary in width, thickness, uniformity and shape. A length of the carbon nanotube wire can be arbitrarily set as desired. A diameter of the twisted carbon nanotube wire is in an approximate range from 0.5 nanometers to 100 micrometers. Further, the twisted carbon nanotube wire can be treated with a volatile organic solvent. After being soaked by the organic solvent, the adjacent paralleled carbon nanotubes in the twisted carbon nanotube wire will bundle together, due to the surface tension of the organic solvent when the organic solvent volatilizing. The specific surface area of the twisted carbon nanotube wire will decrease. The density and strength of the twisted carbon nanotube wire will be increased.

The carbon nanotube cable includes two or more carbon nanotube wires. The carbon nanotube wires in the carbon nanotube cable can be parallel with each other or twisted with each other. The carbon nanotube cable can be twisted or untwisted. In an untwisted carbon nanotube cable, the carbon nanotube wires are parallel with each other. In a twisted carbon nanotube cable, the carbon nanotube wires are twisted with each other.

The first electrode 12 and the second electrode 14 can be directly attached to the heating element 16 thereby forming an electrical contact therebetween. The first electrode 12 and the second electrode 14 can be both attached to the outer surface of the heating element 16, or to the inner surface of the heating element 16. Alternatively, one of the first electrode 12 and the second electrode 14 can be attached to the outer surface of the heating element 16 while the other one is attached to the inner surface of the heating element 16. Furthermore, it is imperative that the first electrode 12 and the second electrode 14 are separated by a certain distance to form a certain resistance therebetween, thereby preventing a short circuit between the first electrode 12 and the second electrode 14. The first electrode 12 and the second electrode 14 can also be attached to the surface of the heating element 16 by a conductive adhesive/paste (not shown). Quite suitably, the conductive adhesive material is silver adhesive. It should be noted that any other bonding ways may be adopted as long as the first electrode 12 and the second electrode 14 are electrically connected to the heating element 16. The material of the first electrode 12 and the second electrode 14 can be selected from metals, conductive resins, or any other suitable materials. In some embodiments, at least one of the first electrode 12 and the second electrode 14 includes at least a drawn carbon nanotube film or at least a linear carbon nanotube structure. In the first embodiment, each of the first electrode 12 and the second electrode 14 includes a linear carbon nanotube structure.

The heat-reflecting layer 17 is configured to reflect the heat emitted from the heating element 16, and control the heating direction of the heating element 16. The heat-reflecting layer 17 may be made of white insulative materials. The material of the heat-reflecting layer 17 can be selected from a group consisting of metal oxides, metal salts, and ceramics. In one embodiment, the heat-reflecting layer 17 is a film made of aluminum oxide (Al₂O₃). A thickness of the heat-reflecting layer 17 is in a range from about 100 µm to about 0.5 mm. In the present embodiment, the thickness of the heat-reflecting layer 17 is about 0.1 mm. More detail, in a first example, the heat-reflecting layer 17 can be located on the inner surface of the hollow supporter 18, and the heating element 16 is disposed on the inner surface of the heat-reflecting layer 17. The inner surface of the heat-reflecting layer 17 is the surface thereof far away from the hollow supporter 18. In a second example, the heat-reflecting layer 17 can be located on the outer surface of the hollow supporter 18, and the heating element 16 is disposed on the inner surface of the hollow supporter 18. Alternatively, the heat-reflecting layer 17 can be omitted. Without the heat-reflecting layer 17, the heating element 16 can be located directly on the hollow supporter 18.

When one of the inner circumferential surface and the outer circumferential surface of the heating element 16 is exposed to air, the hollow heater 10 can further include a protecting layer (not shown) attached to the exposed surface of the heating element 16. The protecting layer can insulate the hollow heater 10 from the outside. The protecting layer can also protect the heating element 16 from impurity of outside. In the present embodiment, the heating element 16 is disposed between the supporter 12 and the heat-reflecting layer 17, whereby the protecting layer can be omitted.

In use of the hollow heater 10, when a voltage is applied to the first electrode 12 and the second electrode 14, and the heating element 16, the carbon nanotube structure of the heating element 16 of the hollow heater 10 generates heat that radiates by electromagnetic waves with a certain wavelength. The object to be heated can be directly disposed in the hollow space 182. Quite suitably, when the heating element 16 of the hollow heater 10 has a predetermined surface area, different applied voltage and the thickness of the heating element 16 can allow the heating element 16 to radiate electromagnetic waves with different wavelengths for generating heat. If the applied voltage is determined at a certain value, the wavelength of the electromagnetic wave emitted from the heating element 16 is inversely proportional to the thickness of the heating element 16. That is to say, the greater the thickness of the heating element 16 is, the shorter the wavelength of the electromagnetic wave is. Further, if the thickness of the heating element 16 is determined at a certain value, the greater the voltage applied to the electrode, the shorter the wavelength of the electromagnetic wave is.

Because the carbon nanotubes have an ideal black body structure, the heating element 16 has excellent electrical conductivity, thermal stability, and high thermal radiation efficiency. Further, since the carbon nanotubes are not oxidized easily, while working, the hollow heater 10 can be safely exposed, to oxidizing gases.

Further, the hollow heater 10 can be disposed in a vacuum device or a device with inert gas filled therein. When the applied voltage is increased in the approximate range from about 80 volts to about 150 volts, the hollow heater 10 emits electromagnetic waves having a relatively short wave length such as visible light (e.g. red light, yellow light etc), general thermal radiation, and ultraviolet radiation. The temperature of heating element 16 can reach about 1500 °C. When the voltage applied to the hollow heater 10 is high enough, the hollow heater 10 can be used to radiate ultraviolet to kill bacteria.

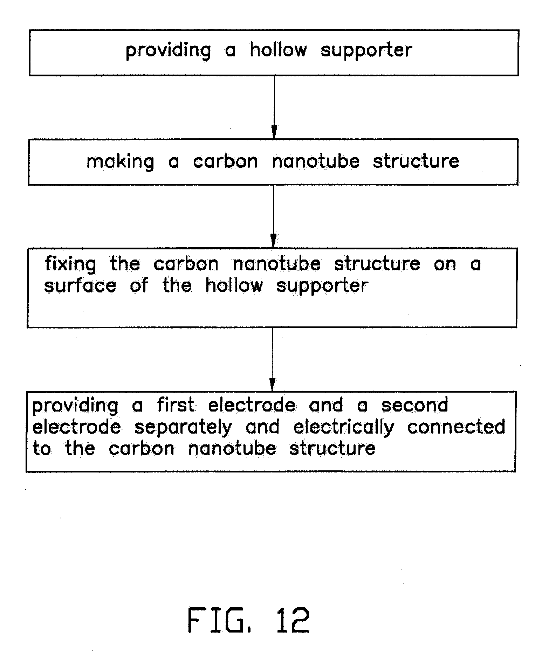

Referring to FIG. 12, a method for making the hollow heater 10 is disclosed. The method includes the steps of:
S 1: providing a hollow supporter 18;
S2: making a carbon nanotube structure;
S3: fixing the carbon nanotube structure on a surface of the hollow supporter 18; and
S4: providing a first electrode 12 and a second electrode 14 electrically connected to the carbon nanotube structure.

It is to be understood that, after step S3, additional step of forming a heat-reflecting layer 17 on the heating element 16 is provided. The heat-reflecting layer 17 can be formed by coating method, chemical deposition method, ion sputtering method, and so on. In the present embodiment, the heat-reflecting layer 17 is a film made of aluminum oxide. The heat-reflecting layer 17 is coated on the heating element 16.

In step S2, the carbon nanotube structure includes carbon nanotube films and linear carbon nanotube structures. The carbon nanotube films can be a drawn carbon nanotube film, a pressed carbon nanotube film or a flocculated carbon nanotube film, or their combination.

In step S2, the method of making a drawn carbon nanotube film includes the steps of:
S21: providing an array of carbon nanotubes; and
S22: pulling out at least one portion of the carbon nanotubes from the carbon nanotube array to obtain a drawn carbon nanotube film, and
S23: treating the drawn carbon nanotube film with an organic solvent.

In step S21, the method of forming the array of carbon nanotubes includes:
S211: providing a substantially flat and smooth substrate;
S212: forming a catalyst layer on the substrate;
S213: annealing the substrate with the catalyst at a temperature in a range from about 700°C to about 900°C in air for about 30 to 90 minutes;
S214: heating the substrate with the catalyst at a temperature in a range from about 500°C to about 740°C in a furnace with a protective gas therein; and
S215: supplying a carbon source gas to the furnace for about 5 to 30 minutes and growing the array of the carbon nanotubes from the substrate.

In step S211, the substrate can be a P-type or N-type silicon wafer. Quite suitably, a 4-inch P-type silicon wafer is used as the substrate.

In step S212, the catalyst can be made of iron (Fe), cobalt (Co), nickel (Ni), or any combination alloy thereof.

In step S214, the protective gas can be made up of at least one of nitrogen (N₂), ammonia (NH₃), and a noble gas.

In step S215, the carbon source gas can be a hydrocarbon gas, such as ethylene (C₂H₄), methane (CH₄), acetylene (C₂H₂), ethane (C₂H₆), or any combination thereof.

In step S22, the drawn carbon nanotube film can be pulled by the steps of:
S221: selecting one or more carbon nanotubes having a predetermined width from the array of carbon nanotubes; and
S222: pulling the carbon nanotubes to form nanotube segments at an even/uniform speed to achieve a uniform carbon nanotube film.

In step S221, the carbon nanotube segment includes a plurality of parallel carbon nanotubes. The carbon nanotube segments can be selected by using an adhesive tape as the tool to contact the super-aligned array of carbon nanotubes. In step S222, the pulling direction is substantially perpendicular to the growing direction of the super-aligned array of carbon nanotubes.

More specifically, during the pulling process, as the initial carbon nanotube segments are drawn out, other carbon nanotube segments are also drawn out end to end due to van der Waals attractive force between ends of adjacent segments. This process of pulling ensures a substantially continuous and uniform carbon nanotube film having a predetermined width can be formed.

In the step S23, the drawn carbon nanotube film can be treated by applying organic solvent to the drawing carbon nanotube film to soak the entire surface of the carbon nanotube film. The organic solvent is volatile and can be selected from the group consisting of ethanol, methanol, acetone, dichloroethane, chloroform, any appropriate mixture thereof. In the present embodiment, the organic solvent is ethanol. After being soaked by the organic solvent, adjacent carbon nanotubes in the carbon nanotube film are able to do so, bundle together, due to the surface tension of the organic solvent when the organic solvent volatilizing. In another aspect, due to the decrease of the specific surface area via bundling, the mechanical strength and toughness of the drawing carbon nanotube film are increased and the coefficient of friction of the carbon nanotube films is reduced. Macroscopically, the drawing carbon nanotube film is an approximately uniform film. It is easy to be understood that the step S23 is an optional step.

A width of the drawing carbon nanotube film depends on a size of the carbon nanotube array. The length of the drawing carbon nanotube film can arbitrarily be set as desired. In one embodiment, when the substrate is a 4 inch type wafer as in the present embodiment, a width of the carbon nanotube film is in an approximate range from 1 centimeter to 10 centimeters, a thickness of the drawing carbon nanotube film is in an approximate range from 0.5 nanometers to 100 microns.

In step S2, the method of making the pressed carbon nanotube film includes the following steps:
S21': providing an array of carbon nanotube and a pressing device; and
S22': pressing the array of carbon nanotubes to form a pressed carbon nanotube film.

In step S21', the carbon nanotube array can be made by the same method as S11.

In the step S22', a certain pressure can be applied to the array of carbon nanotubes by the pressing device. In the process of pressing, the carbon nanotubes in the array of carbon nanotubes separate from the substrate and form the carbon nanotube film under pressure. The carbon nanotubes are substantially parallel to a surface of the carbon nanotube film.

In the present embodiment, the pressing device can be a pressure head. The pressure head has a smooth surface. It is to be understood that, the shape of the pressure head and the pressing direction can determine the direction of the carbon nanotubes arranged therein. When a planar pressure head is used to press the array of carbon nanotubes along the direction perpendicular to the substrate, a carbon nanotube film having a plurality of carbon nanotubes isotropically arranged can be obtained. When a roller-shaped pressure head is used to press the array of carbon nanotubes along a certain direction, a carbon nanotube film having a plurality of carbon nanotubes aligned along the certain direction is obtained. When a roller-shaped pressure head is used to press the array of carbon nanotubes along different directions, a carbon nanotube film having a plurality of carbon nanotubes aligned along different directions is obtained.

In step S2, the flocculated carbon nanotube film can be made by the following method:
S21": providing a carbon nanotube array;
S22": separating the array of carbon nanotubes from the substrate to get a plurality of carbon nanotubes;
S23": adding the plurality of carbon nanotubes to a solvent to get a carbon nanotube floccule structure in the solvent; and
S24": separating the carbon nanotube floccule structure from the solvent, and shaping the separated carbon nanotube floccule structure into a carbon nanotube film, and thereby achieving a flocculated carbon nanotube film.

In step S21 ", the carbon nanotube array can be formed by the same method as step (a1).

In step S22", the array of carbon nanotubes is scraped off the substrate by a knife or other similar devices to obtain a plurality of carbon nanotubes. Such a raw material is, to a certain degree, able to maintain the segmented state of the carbon nanotubes. The length of the carbon nanotubes is above 10 microns.

In step S23", the solvent is selected from a group consisting of water and volatile organic solvent. After adding the plurality of carbon nanotubes to the solvent, a process of flocculating the carbon nanotubes can, suitably, be executed to create the carbon nanotube floccule structure. The process of flocculating the carbon nanotubes can, beneficially, be selected from the group consisting of ultrasonic dispersion of the carbon nanotubes and agitating the carbon nanotubes. In this embodiment ultrasonic dispersion is used to flocculate the solvent containing the carbon nanotubes for about 10∼30 minutes. Due to the carbon nanotubes in the solvent having a large specific surface area and the tangled carbon nanotubes having a large van der Waals attractive force, the flocculated and tangled carbon nanotubes form a network structure (i.e., floccule structure).

In step S24", the process of separating the floccule structure from the solvent includes the substeps of:
S24" 1: filtering out the solvent to obtain the carbon nanotube floccule structure; and
S24"2: drying the carbon nanotube floccule structure to obtain the separated carbon nanotube floccule structure.

In step S24"1, the carbon nanotube floccule structure can be disposed in room temperature for a period of time to dry the organic solvent therein. The time of drying can be selected according to practical needs. The carbon nanotubes in the carbon nanotube floccule structure are tangled together.

In step S24"2, the process of shaping includes the substeps of:
S24"21: putting the separated carbon nanotube floccule structure into a container (not shown), and spreading the carbon nanotube floccule structure to form a predetermined structure;
S24"22: pressing the spread carbon nanotube floccule structure with a certain pressure to yield a desirable shape; and
S24"23: removing the residual solvent contained in the spread floccule structure to form the flocculated carbon nanotube film.

Through the flocculating step, the carbon nanotubes are tangled together by van der Walls attractive force to form a network structure/floccule structure. Thus, the flocculated carbon nanotube film has good tensile strength. The flocculated carbon nanotube film includes a plurality of micropores formed by the disordered carbon nanotubes. A diameter of the micropores is less than about 100 micron. As such, a specific area of the flocculated carbon nanotube film is extremely large. Additionally, the pressed carbon nanotube film is essentially free of binder and includes a large amount of micropores. The method for making the flocculated carbon nanotube film is simple and can be used in mass production.

In step S2, the linear carbon nanotube structure is made by the following steps:
S21"': making a drawn carbon nanotube film;
S22"': treating the drawn carbon nanotube film to form a carbon nanotube wire; and
S23"': making linear carbon nanotube structure with the carbon nanotube wire.

In step S21"', the method for making the drawing carbon nanotube film is the same the step S21.

In step S22"', the drawn carbon nanotube film is treated with a organic solvent to form an untwist carbon nanotube wire or is twist by a mechanical force (e.g., a conventional spinning process) to form a twist carbon nanotube wire. The organic solvent is volatilizable and can be selected from the group consisting of ethanol, methanol, acetone, dichloroethane, and chloroform. Quite suitably, the organic solvent is dropped on the drawn carbon nanotube film through a dropping tube in the present embodiment. After soaking in the organic solvent, the carbon nanotube segments in the carbon nanotube film can at least partially compact/shrink into carbon nanotube wires due to the surface tension of the organic solvent.

It is to be understood that when the width of the drawn carbon nanotube film is relatively small, step S22'" can be omissible to acquire a carbon nanotube wire in an untwisted shape. In this situation, through microscopically view, the carbon nanotube structure is a flat film, and through macroscopically view, the carbon nanotube structure is a long wire.

In step S23"', one carbon nanotube wire can be used as a linear carbon nanotube structure. Alternatively, two or more carbon nanotube wires can be keep together to form a carbon nanotube cable. The carbon nanotube cable can be twisted or untwisted. In the untwisted carbon nanotube cable, the carbon nanotube wires are parallel with each other, and the carbon nanotubes can be keep together by an adhesive(not shown). In the twisted carbon nanotube cable, the carbon nanotube wires twisted with each other, and can be keep together by an adhesive or a mechanical force.

In step S2, the drawn carbon nanotube film, the pressed carbon nanotube film, the flocculated carbon nanotube film, or the linear carbon nanotube structure can be overlapped, stacked with each other, or disposed side by side to make a carbon nanotube structure.

In step S4, the first electrode 12 and the second electrode 14 are made of conductive materials, and formed on the surface of the heating element 16 by sputtering method or coating method. Further, silver paste can be applied on the surface of the heating element 16 directly to form the first electrode 12 and the second electrode 14.

It is to be understood that the above-described embodiments are intended to illustrate rather than limit the invention. Variations may be made to the embodiments without departing from the spirit of the invention as claimed. The above-described embodiments illustrate the scope of the invention but do not restrict the scope of the invention.

It is also to be understood that above description and the claims drawn to a method may include some indication in reference to certain steps. However, the indication used is only to be viewed for identification purposes and not as a suggestion as to an order for the steps.

## Claims

1. An apparatus comprising a hollow heater, the hollow heater comprising:
a heating element comprising a carbon nanotube structure, wherein a hollow space is defined by the carbon nanotube structure; and
at least two electrodes electrically connected to the heating element.

2. An apparatus as claimed in claim 1, wherein the carbon nanotube structure is a free-standing structure and comprises a plurality of carbon nanotubes combined by van der Waals force.

3. An apparatus as claimed in claim 1, wherein the carbon nanotube structure comprises at least one carbon nanotube film, at least one linear carbon nanotube structure or a combination thereof.

4. An apparatus as claimed in claim 3, wherein the carbon nanotube film comprises a plurality of carbon nanotubes arranged in a same direction parallel to a surface of the carbon nanotube film.

5. An apparatus as claimed in claim 4, wherein the carbon nanotubes in the carbon nanotube film are joined end-to-end by van der Waals force.

6. An apparatus as claimed in claim 4 or claim 5, wherein the at least two electrodes are parallel to each other and located on the heating element, wherein the arranged direction of the carbon nanotubes is substantially perpendicular to the at least two electrodes.

7. An apparatus as claimed in claim 3, wherein the heating element comprises two or more carbon nanotube films stacked, coplanar or both stacked and coplanar with each other.

8. An apparatus as claimed in claim 3, wherein the carbon nanotube film comprises a plurality of carbon nanotubes entangled with each other by van der Waals force.

9. An apparatus as claimed in claim 3, wherein the carbon nanotube film comprises a plurality of carbon nanotubes, wherein an angle between a primary alignment direction of the carbon nanotubes and a surface of the carbon nanotube film is in a range from about 0 degrees to about 15 degrees.

10. An apparatus as claimed in claim 3, wherein the linear carbon nanotube structure comprises at least one carbon nanotube wire, wherein the carbon nanotube wire comprises a plurality of carbon nanotubes substantially parallel to an axial direction of the carbon nanotube wire or helically oriented around an axial direction of the carbon nanotube wire.

11. An apparatus as claimed in claim 10, wherein the linear carbon nanotube structure comprises two or more carbon nanotube wires bundled together to form a carbon nanotube cable, wherein the carbon nanotube wires in the carbon nanotube cable are parallel to each other or twisted with each other.

12. An apparatus as claimed in any of claims 3, 10 or 11, wherein the carbon nanotube structure comprises two or more linear carbon nanotube structures, wherein the linear carbon nanotube structures are parallel to each other, crossed with each other, woven together or twisted with each other.

13. An apparatus as claimed in any preceding claim, wherein a heat capacity per unit area of the heating element is less than 2×10⁴ J/m²·K.

14. An apparatus as claimed in any preceding claim, further comprising a heat-reflecting layer configured to control the heating direction of the heating element.

15. A hollow heater comprising:
a hollow supporter having an inner surface and an outer surface opposite to the inner surface;
a carbon nanotube structure attached to one of the inner and outer surfaces of the hollow supporter; and
at least two electrodes electrically connected to the carbon nanotube structure.
